**Europäisches Patentamt**

**European Patent Office**

**Office européen des brevets**

(19)

(11) Publication number: **0 140 570**
A1

# (12) EUROPEAN PATENT APPLICATION

(21) Application number: **84306452.8**

(22) Date of filing: **21.09.84**

(51) Int. Cl.⁴: **B 65 G 53/08**, B 65 G 53/46

(30) Priority: **28.09.83 GB 8325914**

(43) Date of publication of application: **08.05.85**
**Bulletin 85/19**

(84) Designated Contracting States: **BE DE FR SE**

(71) Applicant: **MACAWBER ENGINEERING LIMITED, Shaw Lane Industrial Estate, Doncaster South Yorkshire DN 4SE (GB)**

(72) Inventor: **Snowdon, Brian, 14, Airedale Avenue, Tickhill Doncaster, South Yorkshire (GB)**

(74) Representative: **Harrison, Michael Robert et al, URQUHART-DYKES & LORD 11th Floor Tower House Merrion Way, Leeds LS2 8PB West Yorkshire (GB)**

## (54) Feeding particulate material.

(57) Apparatus for pneumatically conveying particulate material simultaneously to a plurality of destinations includes a chamber (6) into which the particulate material may be fed. The apparatus also includes a screw feeder (7) part of which extends through the chamber (6) and into a tube (8). Tube (8) extends beyond the end of the screw feeder (7) and, beyond said end, the tube (8) is split by partition (17) into a plurality of ducts (18, 19). The ducts (18, 19) in turn are connected to feed pipes (13, 14) which extend to destinations for the particulate material. The apparatus includes a gas supply (12) whereby material entering the ducts (18, 19) may be pushed along the feed pipes (13, 14) to the destinations.

- 1 -

## FEEDING PARTICULATE MATERIAL

This invention relates to a method and apparatus for supplying granular or pulverized material to a number of points in a process or kiln from one feeding device some distance remote from the process or kiln.

Several alternative methods are already available.

One method comprises providing a separate feeding mechanism and pneumatic conveying system for each different point. This method is accurate because of the individual feeding mechanisms but is expensive because of the number of machines required.

An alternative method of feeding particulate material to several different points is to have one feeding mechanism and one conveying pipe which feeds material into a static distribution head with outlets equal in number to the receiving points. This method is relatively inexpensive, but trials by a number of manufacturers have shown that the accuracy of distribution to the receiving points is unpredictable and dependent on the physical orientation of the splitting device and conveying pipework upstream of the splitting device. The length of the individual conveying pipes between the splitting device and the receiving points has to be substantially the same to ensure as even a split of the conveying air flow as possible. The conveying air velocities have to be maintained at a considerably higher level than the theoretical minimum transport velocity in the conveying pipework downstream of the splitting device due to the inaccuracy of material split causing the majority of the air to flow down the pipes with least resistance, which are the ones with least material. Because of the relatively high conveying velocity at this point, wear of the splitter parts is another significant problem.

A further method involves the use of one feeding mechanism and one conveying pipe which feeds material into a distributor with a rotating inner tube which aligns the inlet pipe to the outlet pipe in sequence as the drive motor rotates the inner tube. This arrangement has been shown by test to provide an accuracy of split $\pm$ 10% which in some applications is acceptable. This arrangement is, however, relatively expensive and gives a pulsing flow as the inner rotating tube aligns itself with individual transport pipes. This pulsing is not acceptable in many processes.

According to the present invention there is provided apparatus for pneumatically conveying particulate material simultaneously to a plurality of destinations via a plurality of feed pipes, the apparatus including a chamber having an input portion whereby particulate material may be fed to the chamber, the apparatus further including a screw feeder located at least partially within the chamber and having an end thereof surrounded by a tube, the tube extending beyond the end of the screw feeder and, beyond said end, including at least one partition splitting the tube into a plurality of ducts, the or each partition lying in a plane passing through the axis of the screw feeder, each duct being connected by a feed pipe to a destination for the material, and gas supply means for conveying the material pneumatically from the ducts via the feed pipes to the destinations.

The present invention also provides a method for pneumatically conveying particulate material simultaneously to a plurality of destinations via a plurality of feed pipes, the method including feeding the material to a chamber via an input portion thereof, feeding material from the chamber by means of a screw feeder located therein into a tube which at least partially surrounds the screw feeder, dividing the flow of material within the tube by means of one or more partitions located within the tube whereby the material flows into a plurality of ducts and providing pressurised gas to move the material located within the ducts into associated feed pipes and then to the destinations.

Preferably the partitions split the tube into equal chambers so that equal amounts of particulate material are fed to each destination.

Preferably each chamber has a separate air supply to convey the material down the feed pipe.

The present invention provides accurate, low cost division of the material to be conveyed from a metering feeder screw into the required number of conveying pipes. Variation in conveying pipe pressures normally experienced with pneumatic transport lines do not significantly effect the accuracy of splitting. A further aspect of the invention is the ability to separately divide the conveying air flow to the individual feed pipes, thus allowing the provision of the minimum amount of transport air. The air flow to each feed pipe can also be adjusted by catering for differences in conveying pipe length from the splitting device to the receiving or usage point.

The invention may be used, for example for feeding pulverized fuel to numerous heating zones on brick or lime kilns, or feeding granular damp coal or limestone into the combustion points of a fluid bed boiler.

Two embodiments of apparatus in accordance with the present invention willnow be described by way of example only, with reference to the accompanying drawings, in which:-

Figure 1 is a schematic view of a first example of the apparatus;

Figure 2 is a schematic view of a second example of the apparatus;

Figure 3 is a section through A-A of Figure 2; and,

Figure 4 is a section through B-B of Figure 3.

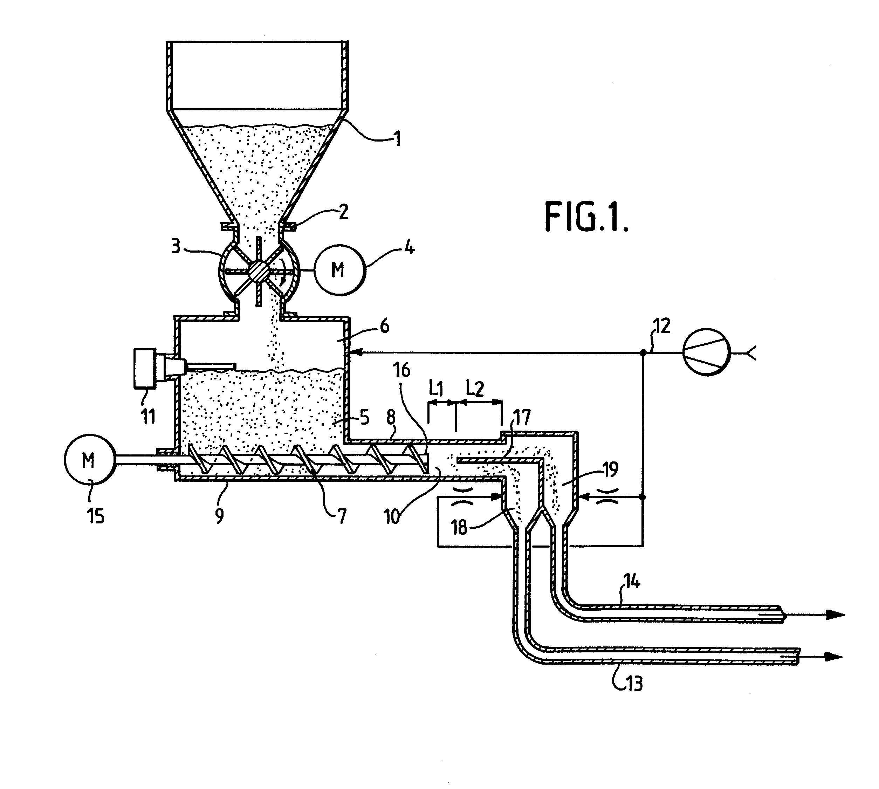

Referring to Figure 1, a first example of apparatus in accordance with the present invention includes a storage hopper 1 having one outlet 2. Particulate material is stored in the storage hopper 1 and gravitates through outlet 2 into a rotary valve 3, which is driven by a motor 4. The valve 3 provides the means of maintaining a head of material 5 in chamber 6 above feeding screw 7. The feeding screw 7 is encased by a pressure tight box 8 which has a troughed bottom section 9 into which the screw 7 fits, and a tubular section 10 into which the material is pushed by the rotation of the screw 7. A level control 11 controls the drive motor 4 of the rotary valve 3. When the material level falls below the level control 11 the motor 4 starts and feeds material into the chamber 6 until the level control 11 is covered, at which point the motor 4 stops. Chamber 6 is connected to a conveying air supply 12. Air supply 12 is also coupled to conveying pipes 13 and 4 so that the pressures in the chamber 6 and conveying pipes 13 and 14 are substantially the same.

A motor 15 is used to turn the screw feeder 7 which propels the particulate material forward, towards one end 16 of the screw 7. The end 16 is surrounded by tube 10. The screw 7 is completely filled with material and this acts as a volumetric feeding device. Within tube 10, downstream of the screw feeder 7 is a partition 17 which splits tube 10 into two equal chambers 18 and 19. The partition 17 lies in a plane passing through the axis of the screw 7.

In the space $L_1$ between the end of the screw 7 and the splitting partition 17 the material forms into a solid plug due to the frictional effects of the tube 10. The plug is pushed forward by the material in the screw 7 and is divided into two streams by the partition 17. The split streams of material, which are still in the form of compacted plugs are pushed by the plug $L_1$ into the chambers 18 and 19 into which air is introduced from air supply 12. The material is then transported pneumatically to the destination points through pipes 13 and 14, connected respectively to chambers 18 and 19.

The air from one chamber 18 can not pass to the other chamber 19 because of the plug of material at either side of the partition 17 of length $L_2$.

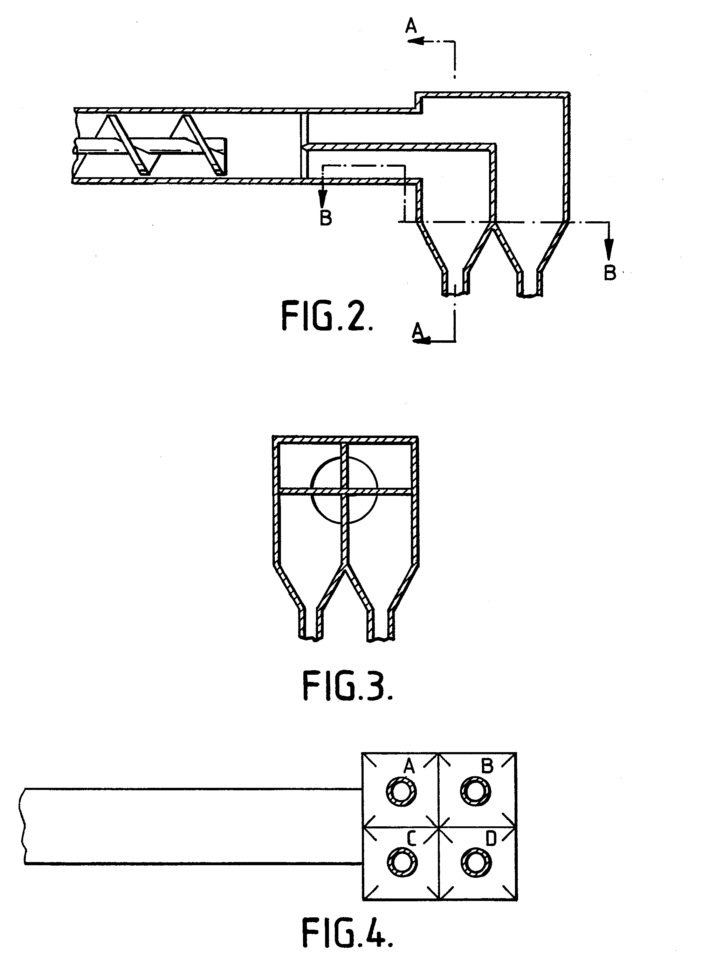

Thus Figure 1 shows only a system of splitting into two streams. The same principle can be used for any number of streams and an example of the splitting section of a four stream system is shown in Figure 2. In this arrangement the four independent chambers A, B, C and D can be seen, each one having an independent air supply.

The rotary valve 2 and level control 11 method of feeding material into a pressurized container 8 is only one example and has a limited application because of the limitation of approximately 1 Bar differential pressure that is possible across the rotary valve 2.

Other known methods for feeding material into a pressurized container can also be used, for example, double flap valves or a material lock vessel with valves at the top and bottom of the vessel which open and close alternatively to feed the material into the pressurized chamber.

0140570

- 6 -

<u>CLAIMS:</u>

1. Apparatus for pneumatically conveying particulate material simultaneously to a plurality of destinations via a plurality of feed pipes, the apparatus including a chamber having an input portion whereby particulate material may be fed to the chamber, the apparatus further including a screw feeder located at least partially within the chamber and having an end thereof surrounded by a tube, the tube extending beyond the end of the screw feeder and, beyond said end, including at least one partition splitting the tube into a plurality of ducts, the or each partition lying in a plane passing through the axis of the screw feeder, each duct being connected by a feed pipe to a destination for the material, and gas supply means for conveying the material pneumatically from the ducts via the feed pipes to the destinations.

2. Apparatus according to claim 1 wherein the tube is divided by the partitions into ducts of equal cross sectional areas so that equal amounts of particulate material are fed to each destination.

3. Apparatus according to claim 1 or claim 2 wherein each duct has associated therewith a separate gas supply to convey the material down the feed pipes.

4. A method for pneumatically conveying particulate material simultaneously to a plurality of destinations via a plurality of feed pipes, the method including feeding the material to a chamber via an input portion thereof, feeding material from the chamber by means of a screw feeder located therein into a tube which at least partially surrounds the screw feeder, dividing the flow of material within the tube by means of one or more partitions located within the tube whereby the material flows into a plurality of ducts and providing pressurised gas to move the material located within the ducts into associated feed pipes and then to the destinations.

FIG.1.

0140570

FIG.2.

FIG.3.

FIG.4.

| | **DOCUMENTS CONSIDERED TO BE RELEVANT** | | EP 84306452.8 |

| Category | Citation of document with indication, where appropriate, of relevant passages | Relevant to claim | CLASSIFICATION OF THE APPLICATION (Int. Cl.4) |
|---|---|---|---|
| A | EP - A2 - 0 068 115 (COMBUSTION ENGINEERING) <br> * Fig. 1 * | 1,4 | B 65 G 53/08 <br> B 65 G 53/46 |
| A | DE - A - 2 229 651 (EGGERATH) <br> * Fig. 1,3 * | 1,4 | |
| A | US - A - 2 315 079 (REEVES) <br> * Fig. 1 * | 1,4 | |

**TECHNICAL FIELDS SEARCHED (Int. Cl.4)**

B 65 G

The present search report has been drawn up for all claims

| Place of search | Date of completion of the search | Examiner |
|---|---|---|
| VIENNA | 21-12-1984 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503. 03.82